# EUROPÄISCHE PATENTSCHRIFT

(11) **EP 3 145 809 B1**
(45) Veröffentlichungstag und Bekanntmachung des Hinweises auf die Patenterteilung: **26.09.2018**
(21) Anmeldenummer: 15723210.9
(22) Anmeldetag: 13.05.2015
(51) Int. Cl.: B63H 25/38, B63G 8/20, F16J 15/18, F16J 15/56

(54) **RUDERANLAGE FÜR UNTERSEEBOOTE**
STEERING GEAR FOR A SUBMARINE
APPAREIL DE GOUVERNAIL POUR UN SOUS-MARINE

(30) Priorität: 21.05.2014 DE 102014209692
(43) Veröffentlichungstag der Anmeldung: 29.03.2017
(73) Patentinhaber: ThyssenKrupp Marine Systems GmbH, 24143 Kiel (DE); thyssenkrupp AG, 45143 Essen (DE)
(72) Erfinder: BRUHN, Christian, 24768 Rendsburg (DE)
(74) Vertreter: thyssenkrupp Intellectual Property GmbH
(86) Internationale Anmeldenummer: PCT/EP2015/060577
(87) Internationale Veröffentlichungsnummer: WO 2015/177017

(56) Entgegenhaltungen:
- DE-A1- 3 310 184
- DE-A1- 3 345 116
- DE-A1- 4 039 173
- US-A- 3 818 853
- US-A1- 2012 058 000

## Beschreibung

Die Erfindung betrifft ein Unterseeboot.

Zur Steuerung der Ruder eines Unterseeboots sind Ruderanlagen bekannt, die mit einem innerhalb des Druckkörpers des Unterseeboots angeordneten Linearantrieb ausgestattet sind, wobei ein linear bewegbarer Teil des Linearantriebs durch eine an dem Druckkörper ausgebildete Druckkörperdurchführung nach außerhalb des Druckkörpers geführt ist, wo der linear bewegbare Teil, bei dem es sich in der Regel um eine Schubstange handelt, mit einem Ruder bewegungsgekoppelt ist. Innerhalb der Druckkörperdurchführung, die mittels einer darin angeordneten Dichtungseinrichtung gegenüber der Außenumgebung des Unterseeboots druckdicht abgedichtet wird, ist der linear bewegliche Teil des Linearantriebs üblicherweise in einer Gleitlagerung umfänglich geführt. Gezeigt ist dies beispielweise in der US 3 818 853.

Schwierigkeiten ergeben sich dann, wenn der linear bewegbare Teil des Linearantriebs z. B. fertigungs-, montage- oder betriebsbedingt nicht exakt mit dem Gleitlager fluchtet. Dies führt in der Regel zu einem Verschleiß der Gleitlagerung und einer damit verbundenen radialen Positionsänderung des linear bewegbaren Teils des Linearantriebs in der Druckkörperdurchführung, was wiederum eine Beschädigung der Dichtungseinrichtung und Leckagen zur Folge haben kann. Eine technisch aufwändige Abdichtung für eine Durchführung zeigt die DE 33 10 184 A1.

Vor diesem Hintergrund liegt der Erfindung die Aufgabe zur Grunde, ein Unterseeboot mit mindestens einer Ruderanlage zu schaffen, bei dem eine zuverlässige Abdichtung der Druckkörperdurchführung, durch welche ein linear bewegbarer Teil des Linearantriebs der Ruderanlage geführt ist, sichergestellt ist.

Diese Aufgabe wird durch ein Unterseeboot mit den in Anspruch 1 angegebenen Merkmalen gelöst. Vorteilhafte Weiterbildungen dieses Unterseeboots ergeben sich aus den Unteransprüchen, der nachfolgenden Beschreibung sowie der Zeichnung. Hierbei können die in den Unteransprüchen angegebenen Merkmale jeweils für sich aber auch in geeigneter Kombination miteinander die erfindungsgemäße Lösung nach Anspruch 1 weiter ausgestalten.

Bei dem erfindungsgemäßen Unterseeboot handelt es sich bevorzugt um ein militärisches Unterseeboot. Dieses Unterseeboot weist eine Druckkörperdurchführung auf, durch welche eine linear bewegbare Schubstange eines in dem Druckkörper angeordneten Linearantriebs einer Ruderanlage des Unterseeboots nach außerhalb des Druckkörpers in einen freidurchfluteten Bereich des Unterseeboots geführt ist. Dort ist die Schubstange in aus dem Stand der Technik bekannter Weise vorzugsweise über ein Gelenkgestänge mit einem von der Ruderanlage zu steuernden Ruder bewegungsgekoppelt. Der Linearantrieb der Ruderanlage kann beispielsweise von einem Hydraulikzylinder oder von einem mittels eines elektrischen Stellmotors angetriebenen Spindelbetrieb gebildet werden. Grundsätzlich ist aber die Art des Linearantriebs beliebig. Bei der Schubstange kann es sich bei Verwendung eines Hydraulikzylinders als Linearantrieb um eine Kolbenstange des Hydraulikzylinders oder bei Verwendung eines Spindeltriebs als Linearantrieb um den translatorisch bewegbaren Teil des Spindeltriebs handeln. Bevorzugt ist die Schubstange allerdings eine mit einem translatorisch bewegbaren Teil des Linearantriebs wie z. B. der Kolbenstange eines Hydraulikzylinders oder dem translatorisch bewegbaren Teil eines Spindeltriebs verbundenes separates Bauteil.

Um zu verhindern, dass Umgebungswasser des Unterseeboots über die Druckköperdurchführung in das Innere des Druckkörpers gelangen kann, ist die Druckkörperdurchführung typischerweise gegenüber der Außenumgebung des Unterseeboots druckdicht abzudichten. Zu diesem Zweck ist die Schubstange in der Druckkörperdurchführung druckdicht durch einen dort angeordneten Dichtungsträger geführt, der erfindungsgemäß in der Druckkörperdurchführung schwimmend gelagert ist. Das heißt, der Dichtungsträger ist in der Druckkörperdurchführung zumindest in radialer Richtung und vorzugsweise sowohl in radialer als auch in axialer Richtung in gewissem Maße bewegbar, wobei an dem Dichtungsträger Dichtungsmittel vorgesehen sind, mit denen die Schubstange gegenüber dem Dichtungsträger druckdicht abgedichtet wird und weitere Dichtungsmittel vorgesehen sind, mit denen der Dichtungsträger gegenüber der Innenwandung der Druckkörperdurchführung druckdicht abgedichtet wird. Das Ziel der Verwendung einer schwimmenden Lagerung des Dichtungsträgers besteht darin, dass der Dichtungsträger bei einer radialen Positionsänderung der Schubstange aufgrund seiner schwimmenden Lagerung seine Lage in der Druckkörperdurchführung an die geänderte Position der Schubstange angleichen kann. Hierdurch wird verhindert, dass die Schubstage bei einer Änderung ihrer radialen Position in der Druckkörperdurchführung und insbesondere bei einem daraus resultierenden Winkelversatz zu der Druckkörperdurchführung solche äußeren Kräfte auf die an dem Dichtungsträger zur Abdichtung der Schubstange gegenüber dem Dichtungsträger vorgesehenen Dichtungsmittel ausübt, die zu einer Beschädigung dieser Dichtungsmittel und einer Leckage in der Druckkörperdurchführung führen könnten.

Der Dichtungsträger wird von einem Hohlkörper gebildet, der sich außenumfänglich über mindestens ein flexibles Dichtungselement an der Druckkörperdurchführung abstützt. Dieser Hohlkörper ist derart dimensioniert, dass er in radialer Richtung ein gewisses Spiel zu der Innenwandung der Druckkörperdurchführung aufweist. Dem außenumfänglich des Hohlkörpers angeordneten flexiblen Dichtungselement kommt hierbei nicht nur die Aufgabe zu, den Dichtungsträger gegenüber der Innenwandung der Druckköperdurchführung druckdicht abzudichten, sondern er dient zugleich zur schwimmenden Lagerung des Dichtungsträgers und in diesem Zusammenhang als Ausgleichselement für eventuell erforderliche Ausgleichbewegungen des Dichtungsträgers bei einer radialen Positionsänderung der durch den Dichtungsträger geführten Schubstange. Abgesehen von diesen vergleichsweise geringen Ausgleichsbewegungen ist der Dichtungsträger feststehend in der Druckkörperdurchführung angeordnet. Insofern kann das außenumfänglich des Dichtungsträgers vorgesehene Dichtungselement von einem vergleichsweise einfach aufgebauten statischen Dichtungselement gebildet werden.
Im Hinblick auf gegebenenfalls auf die Schubstange einwirkende Biegemomente ist es sinnvoll, die Schubstange in der Druckkörperdurchführung in einer Führungsbuchse zu führen. Vorzugsweise ist auch bei dem erfindungsgemäßen Unterseeboot in der Druckkörperdurchführung eine Führungsbuchse für die Schubstange des Linearantriebs der Ruderanlage vorgesehen, an der sich der Dichtungsträger vorteilhaft in axialer Richtung abstützt. Bevorzugt ist der Dichtungsträger hierbei an einer Seite der Führungsbuchse angeordnet, die einem außerhalb des Druckkörpers angeordneten Ende der Druckkörperdurchführung zugewandt ist.

Die Führungsbuchse bildet ein axiales Gleitlager für die Schubstange. Um zu verhindern, dass eine nicht exakt mit der Führungsbuchse fluchtende Schubstange zu einem Verschleiß an dieser Schubstange führt, welche im Hinblick auf die druckdichte Abdichtung der Schubstange gegenüber dem Dichtungsträger problematisch sein könnte und aus diesem Grunde zu verhindern ist, ist zumindest ein Teil der Führungsbuchse, welche eine Kontaktfläche mit der Schubstange bildet, aus einem Material ausgebildet, das eine geringere Festigkeit als die Schubstange aufweist, so dass eine nicht mit der Führungsbuchse fluchtende Schubstange allenfalls zu einem Verschleiß der Führungsbuchse führen kann, aber keine Beschädigung der Schubstange hervorruft.

Im Zusammenhang mit einer Ausgestaltung, bei der sich der Dichtungsträger in der Druckkörperdurchführung an einer Führungsbuchse für die Schubstange abstützt, ist weiter vorteilhaft in der Druckkörperdurchführung ein Stopfen vorgesehen, wobei der Dichtungsträger zwischen der Führungsbuchse und dem Stopfen festgelegt ist. Zweckmäßigerweise ist der Stopfen ringförmig ausgebildet, so dass die Schubstange durch den Stopfen hindurch geführt werden kann.

Weiter zweckmäßig ist der Dichtungsträger nicht direkt zwischen der Führungsbuchse und dem Stopfen festgelegt, sondern weist zwischen der Führungsbuchse und dem Stopfen einen gewissen axialen Bewegungsfreiraum auf, um gegebenenfalls auch eine Ausgleichbewegung des Dichtungsträgers in axialer Richtung zu ermöglichen. Diesbezüglich ist bevorzugt vorgesehen, dass sich der Dichtungsträger an seinen beiden axialen Enden jeweils über mindestens ein flexibles Ausgleichselement gegenüber der Führungsbuchse und dem Stopfen abstützt. Kostengünstig können diese beiden flexiblen Ausgleichselemente von O-Ringen aus einem Elastomermaterial gebildet werden, welche teilweise an den Stirnseiten des Dichtungsträgers bzw. an einer Stirnseite der Führungsbuchse und des Stopfens ausgebildeten Ringnuten eingreifen.

Gemäß einer weiteren bevorzugten Weiterbildung der Erfindung weist der Dichtungsträger an einem Ende, das dem außerhalb des Druckkörpers angeordneten Ende der Druckkörperdurchführung zugewandt ist, eine radiale Erweiterung auf, die sich an einem in der Druckkörperdurchführung ausgebildeten Absatz abstützt. Der Zweck dieser Ausgestaltung besteht darin, zu verhindern, dass der in der Druckkörperdurchführung wirkende Umgebungsdruck des Unterseeboots den Dichtungsträger in Richtung des Linearantriebs der Ruderanlage verschieben kann.

Zur druckdichten Abdichtung der Schubstange gegenüber dem Dichtungsträger ist vorteilhaft vorgesehen, dass sich das Innenvolumen des Dichtungsträgers in einem dem außerhalb des Druckkörpers angeordneten Ende der Druckkörperdurchführung zugewandten Endbereich unter Bildung eines Absatzes radial erweitert, wobei sich an dem Absatz eine Dichtung abstützt, welche die Schubstange gegenüber dem Dichtungsträger abdichtet. Diese Dichtung ist in radialer Richtung zwischen der Schubstange und einer Innenwandung des den Dichtungsträger bildenden Hohlkörpers formschlüssig festgelegt. Um diese Dichtung auch in axialer Richtung an dem in dem Gehäuse ausgebildeten Absatz festzulegen, kann weiter vorteilhaft eine Befestigungsbuchse vorgesehen sein, welche in den radial erweiterten Abschnitt des Dichtungsträgers eingreift und an der von dem Absatz des Dichtungsträgers abgewandten Seite der Dichtung in unmittelbarer Nähe zu der Dichtung endet.

Da die Schubstange relativ zu dem Dichtungsträger translatorisch bewegbar ist, ist zur Abdichtung der Schubstange gegenüber dem Dichtungsträger zweckmäßigerweise eine dynamische Dichtung vorzusehen. Bevorzugt handelt es sich bei dieser Dichtung um eine Dachmanschettendichtung, die sich durch eine geringere Reibung bei einer honen Druckbeständigkeit auszeichnet.

Es ist bekannt, dass dynamische Dichtungen und insbesondere Dachmanschettendichtungen in der Regel sehr empfindlich auf äußere Kräfte reagieren, welche auf die Dichtung quer oder schräg zu ihrer Mittelachse wirken. Um die Einwirkung solcher Kräfte auf die in dem Dichtungsträger zur Abdichtung der Schubstange gegenüber dem Dichtungsträger verwendete Dichtung zu verhindern, sind gemäß einer weiteren vorteilhaften Weiterbildung der Erfindung in dem Dichtungsträger axial beidseitig der in dem Innenlumen des Dichtungsträgers angeordneten Dichtung Führungslager für die Schubstange vorgesehen, welche gegebenenfalls auf den Dichtungsträger und/oder auf die Schubstange ausgeübte äußere Kräfte auffangen, so dass diese nicht auf die Dichtung einwirken können.

Weiter vorteilhaft ist an dem Innenlumen des Dichtungsträgers an einer von dem außerhalb des Druckkörpers angeordneten Ende der Druckkörperdurchführung abgewandten Seite der Dichtung zur Abdichtung der Schubstange gegenüber dem Dichtungsträger eine Ringnut ausgebildet, welche über mindestens einen Kanal mit dem Inneren des Druckkörpers in Verbindung steht. Die an dem Dichtungsträger ausgebildete Ringnut bildet direkt außenseitig der Schubstange einen sich ringförmig um die Schubstange herum erstreckenden Freiraum, in dem sich bei einer Undichtigkeit der Dichtung eindringendes Wasser sammeln kann und von dort über den mit der Ringnut strömungsverbundenen Kanal in das Innere des Druckkörpers abgeleitet werden kann, so dass dort die Undichtigkeit der Dichtung für die Besatzung des Unterseeboots erkennbar wird. Des Weiteren eröffnet diese Ausgestaltung auch die Möglichkeit, von dem Inneren des Unterseeboots aus zunächst Öl in die Ringnut einzuleiten, welches bei einer Leckage an der Dichtung als Ölvorlage dient.

Um auch bei einem eventuellen Versagen der in dem Dichtungsträger zur Abdichtung der Schubstange gegenüber dem Dichtungsträger vorgesehenen Dichtung ein Eindringen von Umgebungswasser in den Druckkörper des Unterseeboots zu verhindern oder zumindest eine in den Druckkörper eindringende Wassermenge zu begrenzen, ist es von Vorteil, wenn in von dem außerhalb des Druckkörpers angeordneten Ende der Druckkörperdurchführung abgewandter Richtung beabstandet von der Dichtung zur Abdichtung der Schubstange gegenüber dem Dichtungsträger eine weitere Dichtung angeordnet ist, welche die Schubstange gegenüber dem Dichtungsträger abdichtet. Bei dieser Dichtung handelt es sich zweckmäßigerweise auch um eine dynamische Dichtung, welche eine Relativbewegung der Schubstange zu den daran angrenzenden Teilen des Dichtungsträgers zulässt.

Nachfolgend ist die Erfindung anhand eines in der Zeichnung dargestellten Ausführungsbeispiels näher erläutert. In der Zeichnung zeigt jeweils schematisch vereinfacht:

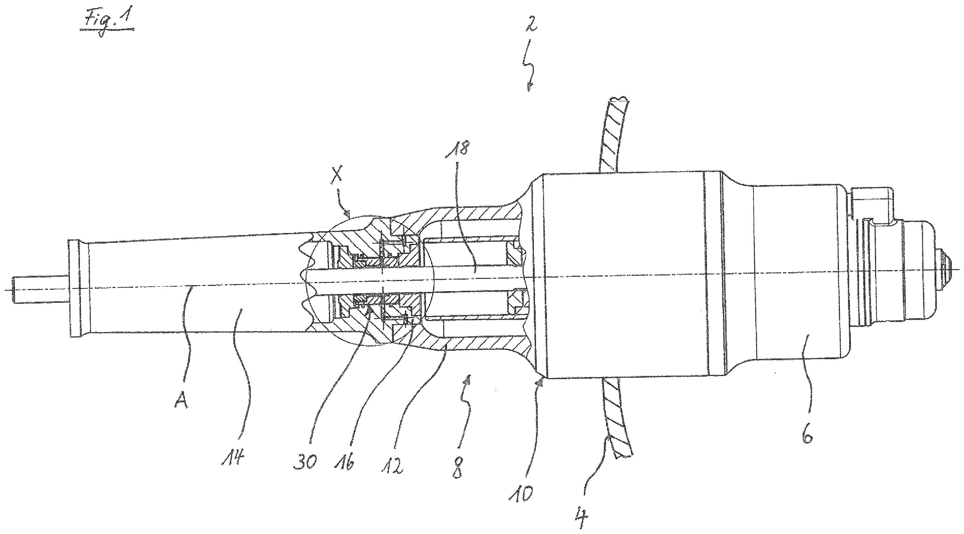

Fig. 1 einen Teil eines Linearantriebs einer Ruderanlage eines Unterseeboots in einer teilgeschnittenen Seitenansicht, und
Fig. 2 eine vergrößert dargestellte Einzelheit X aus Figur 1.

In der Zeichnung ist ein Teil eines Linearantriebs 2 einer ansonsten aus Übersichtlichkeitsgründen nicht dargestellten Ruderanlage eines Unterseeboots dargestellt, mit der ein außerhalb des Druckkörpers 4 des Unterseeboots angeordnetes Ruder gesteuert wird. Bei dem Ruder kann es sich um ein Seitenruder, ein Tiefenruder oder um ein kombiniertes Seiten- und Tiefenruder des Unterseeboots handeln.

Der Linearantrieb 2 weist einen im Inneren des Druckkörpers 4 angeordneten elektrischen Stellmotor in Form eines Synchron-Torque-Motors auf, der in einem Motorgehäuse 6 angeordnet ist. An das Motorgehäuse 6 schließt sich in Richtung einer Mittelachse A eines in der Zeichnung nicht dargestellten Rotors des Stellmotors eine Druckkörperdurchführung 8 an. Die Druckkörperdurchführung 8 weist ein druckdicht ausgebildetes Gehäuseteil 10 auf, welches durch einen bugseitigen Endboden des Druckkörpers Druckdicht hindurchgeführt ist. Außenseitig des Druckkörpers 4 verjüngt sich das Gehäuseteil 10 zu einem Gehäuseteilabschnitt 12, an dessen Ende ein druckdichtes Gehäuseteil 14 befestigt ist, welches ebenfalls einen Teil der Druckkörperdurchführung 8 bildet. Hierbei greift ein absatzförmig verjüngter Endabschnitt 16 des Gehäuseteils 14 in das Ende des Gehäuseabschnitts 12 des Gehäuseteils 10 ein.

In dem durch den Endboden des Druckkörpers 4 geführten Abschnitt des Gehäuseteils 10 ist eine linear bewegbare Spindel eines mit dem in dem Motorgehäuse 6 angeordneten Stellmotor bewegungsgekoppelten Spindeltriebs mit einer in der Druckkörperdurchführung 8 linear bewegbar geführten Schubstange 18 gekoppelt. An einem aus der Druckkörperdurchführung 8 herausragenden Ende ist diese Schubstange 18 über ein nicht dargestelltes Gelenkgestänge mit dem zu steuernden Ruder bewegungsgekoppelt.

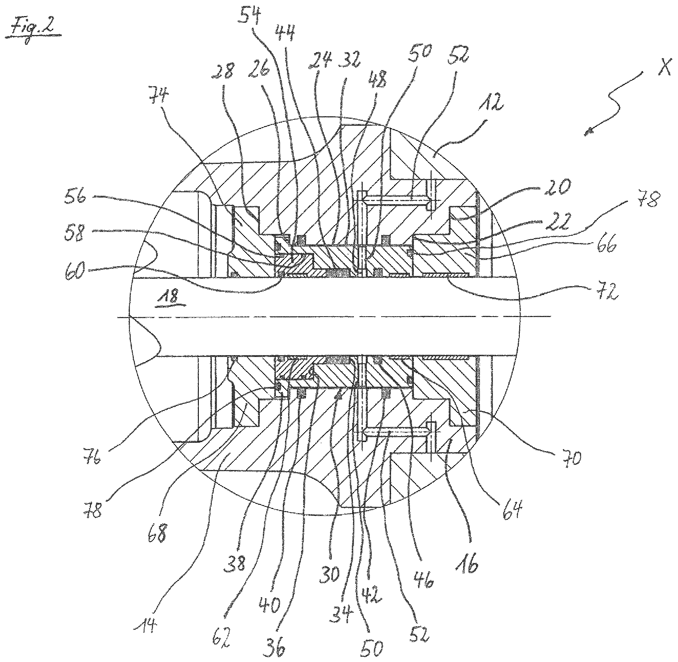

Wie insbesondere aus Fig. 2 deutlich wird, verjüngt sich das Innenlumen des Gehäuseteils 14 ausgehend von seinem in dem Gehäuseteilabschnitt 12 des Gehäuseteils 10 eingreifenden Ende unter Bildung eines Absatzes 20 und eines darauffolgenden Absatzes 22 zu einem Innenlumenabschnitt 24, um sich anschließend unter Bildung eines Absatzes 26 und eines darauffolgenden Absatzes 28 wieder zu erweitern. Im Bereich des Innenlumenabschnitts 24 ist in dem Gehäuseteil 14 ein Dichtungsträger 30 angeordnet, welcher die Druckkörperdurchführung 8 gegenüber der wasserdurchfluteten Außenumgebung des Druckkörpers 4 druckdicht abdichtet.

Der Dichtungsträger 30 wird von einem buchsenartigen Hohlkörper 32 gebildet. Das in Axialrichtung beidseitig offene Innenlumen des Dichtungsträgers 30 erweitert sich in Richtung zu dem außerhalb des Druckkörpers 4 angeordneten Ende der Druckkörperdurchführung 8 stufenweise unter Bildung eines Absatzes 34 und eines Absatzes 36. An seinem dem außerhalb des Druckkörpers 4 zugewandten Ende der Druckkörperdurchführung 8 weist der Dichtungsträger 30 eine radiale Erweiterung 38 auf, mit der sich der Dichtungsträger 30 an dem in dem Gehäuseteil 14 der Druckkörperdurchführung 8 ausgebildeten Absatz 26 in axialer Richtung abstützt.

Der Dichtungsträger 30 ist innerhalb des Gehäuseteils 14 der Druckkörperdurchbrechung 8 schwimmend gelagert. Zu diesem Zweck sind die Querschnittsabmessungen des Hohlkörpers 32 derart, dass der Hohlkörper 32 über seine gesamte Länge ein gewisses radiales Spiel gegenüber der Innenwandung des Gehäuseteils 14 aufweist, wobei er sich in radialer Richtung über zwei flexible, statische Dichtungen 40 und 42 gegenüber der Innenwandung des Gehäuseteils 14 abstützt, die an dem Innenlumenabschnitt 24 des Gehäuseteils 14 in axialer Richtung voneinander beabstandeten Ringnuten angeordnet sind. Mittels der Dichtungen 40 und 42 wird der Dichtungsträger 30 gegenüber dem Gehäuseteil 14 der Druckkörperdurchbrechung 8 druckdicht abgedichtet. Gleichzeitig erlaubt die flexible Ausgestaltung der Dichtungen 40 und 42 gewisse radiale Ausgleichsbewegungen des Dichtungsträgers 30 gegenüber dem Gehäuseteil 14.

An dem Absatz 34 im Innenlumen des Dichtungsträgers 30 stützt sich in axialer Richtung eine dynamische Dichtung 44 in Form einer Dachmanschettendichtung ab, mit welcher die durch den Dichtungsträger 30 geführte Schubstange 18 druckdicht gegenüber dem Dichtungsträger 30 abgedichtet wird. An einem in Richtung zu dem Druckkörper 4 angrenzenden Abschnitt der Innenwandung des Dichtungsträgers 30 ist axial beabstandet von der Dichtung 44 eine weitere dynamische Dichtung 46 angeordnet, welche von einem Dichtring gebildet wird, der in einer an der Innenwandung des Dichtungsträgers 30 ausgebildete Ringnut eingreift.

In einem Bereich zwischen den Dichtungen 44 und 46 ist an der Innenwandung des Hohlkörpers 32 eine weitere Ringnut 48 ausgebildet. Ausgehend von dieser Ringnut 48 erstrecken sich einander diametral gegenüberliegend zwei Kanäle 50 radial durch den Dichtungsträger 30, wobei sie an dem Außenumfang des Dichtungsträgers 30 jeweils mit einem an dem Gehäuseteil 14 der Druckkörperdurchbrechung 8 ausgebildeten Kanal 52 fluchten, welcher, aus der Zeichnung nicht ersichtlich, in dem Inneren des Druckkörpers 4 mündet.

In dem Dichtungsträger 30 ist die Dichtung 44, welche die Schubstange 18 gegenüber dem Dichtungsträger 30 abdichtet, über eine Befestigungsbuchse 54 in axialer Richtung festgelegt. Die Befestigungsbuchse 54 greift in das Innenlumen des Dichtungsträgers 30 ein und schließt an der von dem Druckkörper 4 abgewandten Außenseite des Dichtungsträgers 30 bündig mit diesem ab. An seinem Außenumfang ist die Befestigungsbuchse 54 über zwei in axialer Richtung voneinander beabstandete Dichtringe 56 und 58, welche jeweils in eine an der Befestigungsbuchse 54 ausgebildete Ringnut eingelassen sind, gegenüber dem Dichtungsträger 30 abgedichtet.

An ihrem Innenumfang ist an der Befestigungsbuchse 54 ein weiterer, in einer dort ausgebildeten Ringnut eingelassener Dichtring 60 angeordnet, der die Befestigungsbuchse 54 gegenüber der durch die Befestigungsbuchse 54 geführten Schubstange 18 abdichtet, wobei die vorrangige Aufgabe des Dichtrings 60 darin besteht, einen Abstreifer zu bilden, welcher verhindert, dass in dem Umgebungswasser des Unterseeboots befindliche Partikel in den Zwischenraum zwischen der Schubstange 18 und dem Dichtungsträger 30 eindringen können.

In axialer Richtung neben dem Dichtring 60 ist in einer weiteren an dem Innenumfang der Befestigungsbuchse 54 ausgebildeten Ringnut ein Lagerring 62 eingelassen, der ein Axialgleitlager für die Schubstange 18 bildet. In Richtung zu dem Druckkörper 4 ist außenseitig der Dichtung 46 an der Innenwandung des Dichtungsträgers 30 ein weiterer in eine Ringnut eingelassener Lagerring 64 angeordnet, welcher ein weiteres Axialgleitlager für die Schubstange 18 bildet.

In dem Gehäuseteil 14 der Druckkörperdurchführung 8 ist der Dichtungsträger 30 zwischen einer Führungsbuchse 66 und einem Stopfen 68 in axialer Richtung festgelegt. Die Führungsbuchse 66 greift hierbei in das offene Ende des Gehäuseteils 14 im Bereich dessen Endabschnitts 16 ein, wobei sich eine an der Führungsbuchse 66 ausgebildete radiale Erweiterung 70 an dem in dem Innenlumen des Gehäuseteils 14 ausgebildeten Absatz 20 abstützt. An der Führungsbuchse 66 ist an deren Innenumfang eine Ringnut ausgebildet, in welcher ein Lagerring 72 angeordnet ist, der ein weiteres Axialgleitlager für die Schubstange 18 bildet. Der Stopfen 68 greift über das außerhalb des Druckkörpers 4 angeordnete Ende der Druckkörperdurchbrechung 8 in das Gehäuseteil 14 ein, wobei er sich über eine an dem Stopfen 68 ausgebildete radiale Erweiterung 74 an dem in dem Innenlumen des Gehäuseteils 14 ausgebildeten Absatz 28 abstützt. An dem ringförmig ausgebildeten Stopfen 68, durch welchen die Schubstange 18 hindurchgeführt ist, ist an dem Innenumfang ein in einer Ringnut eingelassener Dichtring 76 angeordnet, der einen Abstreifer bildet, welcher verhindern soll, dass in dem Umgebungswasser des Unterseeboots befindliche Partikel in den Zwischenraum zwischen dem Stopfen 68 und der Führungsbuchse 66 eindringen können.

In diesem Zwischenraum zwischen der Führungsbuchse 66 und dem Stopfen 68 ist der Dichtungsträger 30 auch in axialer Richtung schwimmend gelagert, so dass zwischen dem Dichtungsträger 30 und der Führungsbuchse 66 sowie dem Stopfen 68 ein gewisses axiales Spiel besteht. Sowohl an der der Führungsbuchse 66 zugewandten Stirnseite als auch an der dem Stopfen 68 zugewandten Stirnseite ist an dem Dichtungsträger 30 eine Ringnut ausgebildet, in der jeweils ein flexibel ausgebildeter O-Ring 78 angeordnet ist, an welchem sich der Dichtungsträger 30 in axialer Richtung federnd gelagert abstützt.

### Bezugszeichenliste

- 2: - Linearantrieb
- 4: - Druckkörper
- 6: - Motorgehäuse
- 8: - Druckkörperdurchführung
- 10: - Gehäuseteil
- 12: - Gehäuseteilabschnitt
- 14: - Gehäuseteil
- 16: - Endabschnitt
- 18: - Schubstange
- 20: - Absatz
- 22: - Absatz
- 24: - Innenlumenabschnitt
- 26: - Absatz
- 28: - Absatz
- 30: - Dichtungsträger
- 32: - Hohlkörper
- 34: - Absatz
- 36: - Absatz
- 38: - Erweiterung
- 40: - Dichtung
- 42: - Dichtung
- 44: - Dichtung
- 46: - Dichtung
- 48: - Ringnut
- 50: - Kanal
- 52: - Kanal
- 54: - Befestigungsbuchse
- 56: - Dichtring
- 58: - Dichtring
- 60: - Dichtring
- 62: - Lagerring
- 64: - Lagerring
- 66: -- Führungsbuchse
- 68: - Stopfen
- 70: - Erweiterung
- 72: - Lagerring
- 74: - Erweiterung
- 76: - Dichtring
- 78: - O-Ring

- A: - Mittelachse
- X: - Einzelheit

## Patentansprüche

1. Unterseeboot mit mindestens einer Druckkörperdurchführung (8), durch welche eine Schubstange (18) eines in dem Druckkörper (4) angeordneten Linearantriebs einer Ruderanlage nach außerhalb des Druckkörpers (4) geführt ist, wobei die Schubstange (18) druckdicht durch einen Dichtungsträger (30) geführt ist, **dadurch gekennzeichnet, dass** der Dichtungsträger in der Druckkörperdurchführung (8) druckdicht schwimmend gelagert ist, wobei der Dichtungsträger (30) von einem Hohlkörper (32) gebildet wird, welcher sich außenumfänglich über mindestens ein flexibles Dichtungselement (40, 42) an der Druckkörperdurchführung (8) abstützt und der derart dimensioniert ist, dass er in radialer Richtung Spiel zu der Innenwandung der Druckkörperdurchführung (3) aufweist.

2. Unterseeboot nach einem der vorangehenden Ansprüche, bei dem in der Druckkörperdurchführung (8) eine Führungsbuchse (66) zur axialen Führung der Schubstange (18) angeordnet ist, an welcher sich der Dichtungsträger (30) in axialer Richtung abstützt.

3. Unterseeboot nach Anspruch 2, bei dem der Dichtungsträger (30) in der Druckkörperdurchführung (8) zwischen der Führungsbuchse (66) und einem in der Druckkörperdurchführung (8) befestigten Stopfen (68) festgelegt ist.

4. Unterseeboot nach Anspruch 3, bei dem sich der Dichtungsträger (30) an seinen beiden axialen Enden jeweils über mindestens ein flexibles Ausgleichselement gegenüber der Führungsbuchse (66) und dem Stopfen (68) abstützt.

5. Unterseeboot nach einem der vorangehenden Ansprüche, bei dem der Dichtungsträger (30) an einem Ende, welches einem außerhalb des Druckkörpers (4) angeordneten Ende der Druckkörperdurchführung (8) zugewandt ist, eine radiale Erweiterung (38) aufweist, die sich an einem in der Druckkörperdurchführung (8) ausgebildeten Absatz (26) abstützt.

6. Unterseeboot nach einem der vorangehenden Ansprüche, bei dem sich das Innenlumen des Dichtungsträgers (30) in einem dem außerhalb des Druckkörpers (4) angeordneten Ende der Druckkörperdurchführung (8) zugewandten Endbereich unter Bildung eines Absatzes (34) radial erweitert, wobei sich an dem Absatz (34) eine Dichtung (44) abstützt, welche die Schubstange (18) gegenüber dem Dichtungsträger (30) abdichtet.

7. Unterseeboot nach Anspruch 6, bei dem die Dichtung (44) eine Dachmanschettendichtung ist.

8. Unterseeboot nach einem der Ansprüche 6 oder 7, **dadurch gekennzeichnet, dass** in dem Dichtungsträger (30) axial beidseitig der in dem Innenlumen des Dichtungsträgers (30) angeordneten Dichtung (44) Führungslager für die Schubstange (18) vorgesehen sind.

9. Unterseeboot nach einem der Ansprüche 6 bis 8, bei dem an dem Innenlumen des Dichtungsträgers (30) an einer von dem außerhalb des Druckkörpers (4) angeordneten Ende der Druckkörperdurchführung (8) abgewandten Seite der Dichtung (44) eine Ringnut (48) ausgebildet ist, welche über mindestens einen Kanal (50, 52) mit dem Inneren des Druckkörpers (4) in Verbindung steht.

10. Unterseeboot nach einem der Ansprüche 6 bis 9, bei dem in dem Innenlumen des Dichtungsträgers (30) in von dem außerhalb des Druckkörpers (4) angeordneten Ende der Druckkörperdurchführung (8) abgewandter Richtung beabstandet von der Dichtung (44) eine weitere Dichtung (46) angeordnet ist, welche die Schubstange (18) gegenüber dem Dichtungsträger (30) abdichtet.

## Claims

1. Submarine having at least one pressure hull leadthrough (8) through which a thrust rod (18) of a linear drive, arranged in the pressure hull (4), of a rudder system is led to the outside of the pressure hull (4), wherein the thrust rod (18) is led in pressure-tight fashion through a seal carrier (30), **characterized in that** the seal carrier is mounted in pressure-tight, floating fashion in the pressure hull leadthrough (8), wherein the seal carrier (30) is formed by a hollow body (32) which at the outer circumference is supported by means of at least one flexible seal element (40, 42) on the pressure hull leadthrough (8) and which is dimensioned so as to exhibit play in a radial direction with respect to the inner wall of the pressure hull leadthrough (3).

2. Submarine according to one of the preceding claims, in which, in the pressure hull leadthrough (8), there is arranged a guide bushing (66) for the axial guidance of the thrust rod (18), on which guide bushing the seal carrier (30) is supported in an axial direction.

3. Submarine according to Claim 2, in which the seal carrier (30) is fixed in the pressure hull leadthrough (8) between the guide bushing (66) and a plug (68) which is fastened in the pressure hull leadthrough (8).

4. Submarine according to Claim 3, in which the seal carrier (30) is, at its two axial ends, supported in each case by means of at least one flexible compensating element with respect to the guide bushing (66) and the plug (68) .

5. Submarine according to one of the preceding claims, in which the seal carrier (30), on an end facing toward that end of the pressure hull leadthrough (8) which is arranged outside the pressure hull (4), comprises a radial extension (38) which is supported on a shoulder (26) formed in the pressure hull leadthrough (8) .

6. Submarine according to one of the preceding claims, in which the inner lumen of the seal carrier (30) radially widens, so as to form a shoulder (34), in an end region facing toward that end of the pressure hull leadthrough (8) which is arranged outside the pressure hull (4), wherein, on the shoulder (34), there is supported a seal (44) which seals off the thrust rod (18) with respect to the seal carrier (30).

7. Submarine according to Claim 6, in which the seal (44) is a V-ring seal.

8. Submarine according to either of Claims 6 and 7, **characterized in that**, in the seal carrier (30), axially to both sides of the seal (44) arranged in the inner lumen of the seal carrier (30), there are provided guide bearings for the thrust rod (18).

9. Submarine according to one of Claims 6 to 8, in which, on the inner lumen of the seal carrier (30), on a side of the seal (44) averted from that end of the pressure hull leadthrough (8) which is arranged outside the pressure hull (4), there is formed a ring-shaped groove (48) which is connected via at least one channel (50, 52) to the interior of the pressure hull (4).

10. Submarine according to one of Claims 6 to 9, in which, in the inner lumen of the seal carrier (30), spaced apart from the seal (44) in a direction averted from that end of the pressure hull leadthrough (8) which is arranged outside the pressure hull (4), there is arranged a further seal (46) which seals off the thrust rod (18) with respect to the seal carrier (30).

## Revendications

1. Sous-marin comprenant au moins une traversée de coque pressurisée (8) à travers laquelle une bielle (18) d'un mécanisme d'entraînement linéaire, disposé dans la coque pressurisée (4), d'un gouvernail est amenée vers l'extérieur de la coque pressurisée (8), la bielle (18) étant passée à travers un support de garniture d'étanchéité (30) avec étanchéité à la pression, **caractérisé en ce que** le support de garniture d'étanchéité est monté flottant avec étanchéité à la pression dans la traversée de coque pressurisée (4), le support de garniture d'étanchéité (30) étant formé par un corps creux (32) qui, sur le pourtour extérieur, s'appuie sur la traversée de coque pressurisée (8) par le biais d'au moins un élément d'étanchéité (40, 42) flexible et qui est dimensionné de telle sorte qu'il possède un jeu dans la direction radiale par rapport à la paroi intérieure de la traversée de coque pressurisée (3).

2. Sous-marin selon l'une des revendications précédentes, avec lequel une douille de guidage (66) servant au guidage axial de la bielle (18) est disposée dans la traversée de coque pressurisée (8), sur laquelle s'appuie le support de garniture d'étanchéité (30) dans la direction axiale.

3. Sous-marin selon la revendication 2, avec lequel le support de garniture d'étanchéité (30) est bloqué dans la traversée de coque pressurisée (8) entre la douille de guidage (66) et un bouchon (68) fixé dans la traversée de coque pressurisée (8).

4. Sous-marin selon la revendication 3, avec lequel le support de garniture d'étanchéité (30) s'appuie au niveau de ses deux extrémités axiales par rapport à la douille de guidage (66) et le bouchon (68) respectivement par le biais d'au moins un élément de compensation flexible.

5. Sous-marin selon l'une des revendications précédentes, avec lequel le support de garniture d'étanchéité (30) possède, à une extrémité qui fait face à une extrémité de la traversée de coque pressurisée (8) disposée à l'extérieur de la coque pressurisée (4), un élargissement radial (38) qui s'appuie sur un talon (26) formé dans la traversée de coque pressurisée (8).

6. Sous-marin selon l'une des revendications précédentes, avec lequel l'espace intérieur du support de garniture d'étanchéité (30) s'élargit dans le sens radial, en formant un talon (34), dans une zone d'extrémité faisant face à l'extrémité de la traversée de coque pressurisée (8) disposée à l'extérieur de la coque pressurisée (4), une garniture d'étanchéité (44), qui réalise l'étanchéité de la bielle (18) par rapport au support de garniture d'étanchéité (30), s'appuyant sur le talon (34).

7. Sous-marin selon la revendication 6, avec lequel la garniture d'étanchéité (44) est une manchette d'étanchéité supérieure.

8. Sous-marin selon l'une des revendications 6 ou 7, **caractérisé en ce que** des paliers de guidage pour la bielle (18) se trouvant dans le support de garniture d'étanchéité (30) des deux côtés, dans le sens axial, de la garniture d'étanchéité (44) disposée dans l'espace intérieur du support de garniture d'étanchéité (30) .

9. Sous-marin selon l'une des revendications 6 à 8, avec lequel une rainure annulaire (48) est formée au niveau de l'espace intérieur du support de garniture d'étanchéité (30), sur un côté de la garniture d'étanchéité (44) à l'opposé de l'extrémité de la traversée de coque pressurisée (8) disposée à l'extérieur de la coque pressurisée (4), laquelle se trouve en liaison avec l'intérieur de la coque pressurisée (4) par le biais d'au moins un canal (50, 52) .

10. Sous-marin selon l'une des revendications 6 à 9, avec lequel une garniture d'étanchéité supplémentaire (46) est disposée dans l'espace intérieur du support de garniture d'étanchéité (30), espacée de la garniture d'étanchéité (44) dans la direction à l'opposé de l'extrémité de la traversée de coque pressurisée (8) disposée à l'extérieur de la coque pressurisée (4), laquelle garniture d'étanchéité supplémentaire réalise l'étanchéité de la bielle (18) par rapport au support de garniture d'étanchéité (30).
